# EUROPÄISCHE PATENTSCHRIFT

(11) **EP 0 923 274 B1**
(45) Veröffentlichungstag und Bekanntmachung des Hinweises auf die Patenterteilung: **03.04.2002**
(21) Anmeldenummer: 98122520.4
(22) Anmeldetag: 27.11.1998
(51) Int. Cl.: H05B 39/04

(54) **Universaldimmer und Verfahren zum Dimmen**
Universal dimmer and process for dimming
Dimmer universel et procédé de gradation de lumière

(30) Priorität: 10.12.1997 DE 19754866
(43) Veröffentlichungstag der Anmeldung: 16.06.1999
(73) Patentinhaber: SIEMENS AKTIENGESELLSCHAFT, 80333 München (DE)
(72) Erfinder: Stiegelbauer, Walter, Dipl.-Ing. (FH), 93057 Regensburg (DE); Zierhut, Ingeborg, 81739 München (DE)

(56) Entgegenhaltungen:
- EP-A- 0 618 667
- WO-A-92/15052
- DE-A- 19 751 828

## Beschreibung

Die Erfindung bezieht sich zunächst auf einen Universaldimmer, insbesondere zum Dimmen von Niedervolt-Halogenlampen, nachstehend als NVH-Lampen bezeichnet, im einzelnen nach Gattungsbegriff von Patentanspruch 1. Beim Universaldimmer wirkt mittels einer Detektorschaltung bei kapazitiver Last, wie sie elektronische Transformatoren darstellen, eine Steuerschaltung auf eine Dimmschaltung im Sinne einer Phasenabbschnittsteuerung ein. Bei induktiver Last, wie sie herkömmliche Transformatoren darstellen, wirkt die Steuerschaltung auf die Dimmschaltung im Sinne einer Phasenanschnittsteuerung ein. Die Dimmschaltung arbeitet mit zwei gegensinnig, bzw. gegenpolig in Serie geschalteten Halbleiterventilen, nachstehend als antiserielle Anordnung bezeichnet, die an ihrer Verbindungsleitung an Bezugsmasse der Steuerschaltung liegen. Die Detektorschaltung wertet typische Schaltimpulse aus. Derartige Universaldimmer sind in verschiedenartigen Ausführungen bekannt (WO 92/15052; EP-A1-P 588 273; EP-A1-618 667).

Bekannte Universaldimmer werten die Spannung an einem Schaltventil zwischen Außenleiter und Bezugsmassse aus. Da sich der Schaltimpuls dem Verlauf der Netzspannung überlagert, muß eine Ansprechschwelle darüber liegen. Die Umschaltung von der Phasenabschnittsteuerung zur Phasenanschnittsteuerung hängt hierbei von Schwankungen der Netzspannung ab. Da elektronische Transformatoren gegen Ströme, wie sie durch Aufladen von Schaltungskapazitäten beim Einschalten von Spannung entstehen, gefährdet werden könnten, möchte man die niedrigen Einschaltströme im Spannungsnulldurchgang bei der Phasenabschnittsteuerung für kapazitive Last, wie sie elektronische Transformatoren darstellen, nutzen. Andererseits möchte man sicherstellen, daß herkömmliche Transformatoren, insbesondere für NVH-Lampen, nicht durch hohe Spannungsimpulse zum Abschaltzeitpunkt der Phasenabschnittsteuerung belastet werden. Hohe Abschaltimpulse könnten einen herkömmlichen Transformator so weit in Sättigung treiben, daß er überhitzt werden könnte. Bei induktiver Last, wie sie herkömmliche Transformatoren darstellen, möchte man daher sicherstellen, daß mit Phasenanschnittsteuerung gearbeitet wird, wo im Stromnulldurchgang nur verhältnismäßig niedrige Abschaltimpulse entstehen.

Der Erfindung liegt die Aufgabe zugrunde, einen Universaldimmer zu entwickeln und ein Verfahren anzugeben, wobei das Umschalten von der Phasenabschnittsteuerung die Phasenanschnittsteuerung besonders zuverlässig und auf einfache Weise erfolgt.

Die Lösung der geschilderten Aufgabe erfolgt zunächst durch einen Universaldimmer nach Patentanspruch 1. Die Detektorschaltung ist dafür ausgelegt, den beim Abschalten einer induktiven Last in Phasenabschnittsteuerung auftretenden Spannungsimpuls oberhalb einer vorgegebenen Schwelle für zumindest eine Halbwelle zwischen Neutralleiter und Bezugsmasse zu detektieren. In der Phasenabschnittsteuerung treten zum Abschaltzeitpunkt vergleichsweise niedrige Spannungsimpulse auf, die weitgehend von der Höhe der Netzspannung unabhängig sind. Man kann daher mit definierten, im Vergleich zur Netzspannung niedrigen Schwellwerten arbeiten. Die Detektorschaltung kann daher besonders zuverlässig umschalten. Bei bisherigen Lösungen wird dagegen die Spannung an einem Schaltelement detektiert und zwar zwischen einem Außenleiter und der Bezugsmasse, so daß sich der Schaltimpuls der Netzspannung überlagert.

Die Lösung der geschilderten Aufgabe erfolgt weiter durch ein Verfahren nach Anspruch 6. Bei kapazitiver Last wird im Sinne einer Phasenabschnittsteuerung gedimmt und bei induktiver Last im Sinne einer Phasenanschnittsteuerung. Wesentlich ist, daß der beim Abschalten einer induktiven Last auftretende Spannungsimpuls oberhalb eines vorgegebenen Schwellwerts für zumindest eine Halbwelle zwischen Neutralleiter und Bezugsmasse detektiert wird.

Als Halbleiterventile können Leistungstransistoren dienen, deren Gates gesondert und gegensinnig angesteuert sind. Die Halbleiterventile können in Chiptechnologie als geeignete Halbleiterbereiche ausgebildet sein.

Als Leistungstransistoren können MOSFETs dienen. Als Leistungstransistoren eignen sich auch IGBTs. MOSFETs und IGBTs eignen sich für Phasenabschnittsteuerungen. Triacs bereiten wegen ihres Haltestroms im Zusammenwirken mit Entstörnetzwerken elektronischer Transformatoren Probleme.

Es ist günstig, wenn die Detektorschaltung mit einem Zeitfenster arbeitet, das mehrere Halbwellen erfaßt und daß sie ein Umschaltsignal erst abgibt, wenn über mehrere Halbwellen der eingestellte Schwellwert überschritten wird. Dadurch wird die Störsicherheit erhöht.

Die Erfindung soll nun anhand eines in der Zeichnung grob schematisch wiedergegebenen Ausführungsbeispiels näher erläutert werden:
- In FIG 1: ist eine Schaltung für den Unversaldimmer veranschaulicht.
- In FIG 2: ist für eine Periode der Netzfrequenz über eine Halbwelle bei Phasenabschnittsteuerung veranschaulicht, wie der Schaltimpuls für den Detektor gewonnen wird.

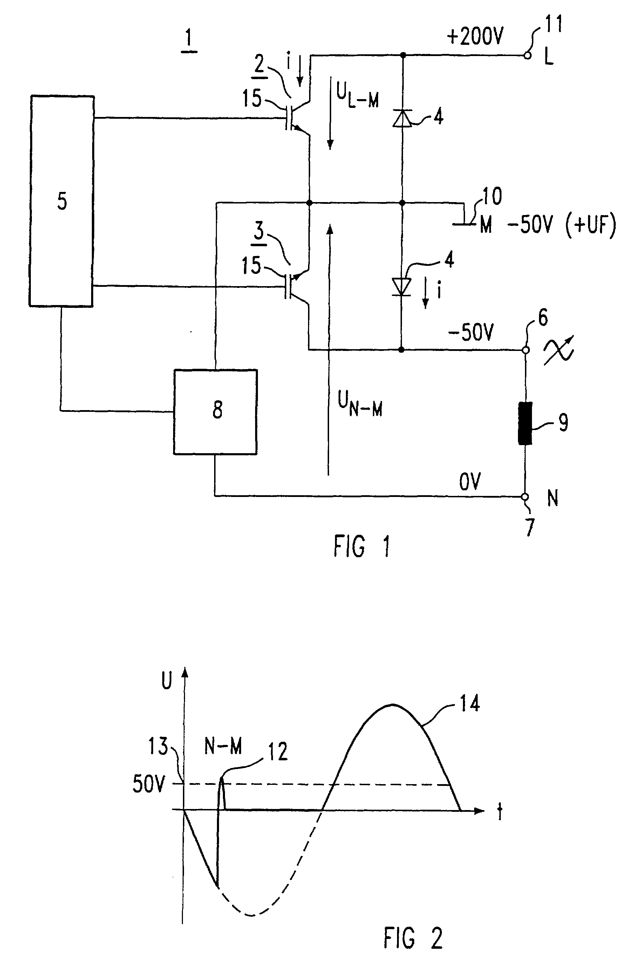

Der Universaldimmer nach FIG 1 arbeitet mit einer Dimmschaltung 1 mit gegensinnig bzw. gegenpolig in Serie geschalteten steuerbaren Halbleiterventilen 2 und 3. Eine derartige Anordnung wird auch als antiserielle Anordnung bezeichnet. Halbleiterventile wie MOSFETs und IGBTs weisen technologiebedingt eine innere Bodydiode 4 auf, die gegenpolig zum Halbleiterventil ausgebildet ist. Die Halbleiterventile 2 und 3 werden von einer Steuerschaltung 5 angesteuert. Die Ansteuerung erfolgt derart, daß zwischen einem Lastanschluß 6 und dem Neutralleiter 7, N, eine Phasenabschnittsteuerung oder eine Phasenanschnittsteuerung in Abhängigkeit von einer Detektorschaltung 8 erfolgt. Die Last 9 kann ein elektronischer Transformator oder ein herkömmlicher Transformator sein, der mit seiner Eingangsseite an die Dimmschaltung 1 angeschlossen ist und mit seiner Ausgangsseite an einen Verbraucher, insbesondere an eine Niedervolt-Halogenlampe, NVH-Lampe. Die Ansteuerung von zwei antiseriellen Halbleiterventilen 2, 3 ist im Zuschnitt auf besondere Anforderungen an anderer Stelle bereits beschrieben worden (EP-B-0 717 886 und EP-B-0 717 887).

Wesentlich ist, daß die Detektorschaltung den Schaltimpuls nicht an einem Halbleiterventil 2, 3 für sich abgreift, sondern zwischen Bezugsmasse 10 und dem Neutralleiter 7. Die Dimmschaltung 1 hat einen Versorgungsanschluß 11, an dem beispielsweise in einem bestimmten Momentzustand +200 V anliegen, wobei das Netzwerk der Dimmschaltung 1 im einzelnen so aufgebaut sein kann, daß ausgehend vom Neutralleiter 7 am Lastanschluß 6 -50 V anstehen und an der Bezugsmasse 10 -50 V zuzüglich der Diodenspannung, die für diese Betrachtung vernachlässigbar ist. In FIG 1 sind weiter eine Spannung u_{L bis M} und eine Spannung u_{N bis M} sowie für den wiedergegebenen momentanen Schaltzustand die Stromrichtungen i beim Halbleiterventil 2 und bei der Bodydiode 4 das Halbleiterventil 3 veranschaulicht.

Für den Schaltzustand nach FIG 1 ist in FIG 2 anhand des Spannungsverlaufs einer Netzspannung und für eine Abschnittsteuerung im Ausschaltmoment die Spannung des Schaltimpulses veranschaulicht. Auf der Ordinate ist die Spannung U und auf der Abszisse die Zeit t abgetragen. Bei der Überwachung einer Halbwelle ist für Ausschaltzustand ein Schaltimpuls wiedergegeben, der einen Schwellwert 13 von beispielsweise +50 V übersteigt, so daß die Detektorschaltung 8 aus diesem Zustand erkennt, daß am Lastanschluß 6 ein herkömmlicher Transformator angeschlossen ist und die Steuerschaltung 5 für Phasenanschnittdimmen umstellt. Die Netzspannung 14 wird dann nach Phasenanschnittsteuerung geschaltet.

Das Verfahren zum Dimmen, insbesondere von NVH-Lampen, erfolgt also derart, daß bei kapazitiver Last im Sinne einer Phasenabschnittsteuerung gedimmt wird und bei induktiver Last im Sinne einer Phasenanschnittsteuerung. Beim Abschalten einer induktiven Last auftretende Spannungsimpulse oberhalb einer vorgegebenen Schwelle, für zumindest eine Halbwelle, zwischen Neutralleiter 7 und Bezugsmasse M werden also detektiert und als Kriterium für die Umschaltung von Phasenabschnittsteuerung auf Phasenanschnittsteuerung genutzt.

Im Ausführungsbeispiel wird der Schaltimpuls 12 der Einfachheit der Schaltung wegen nur in einer Halbwelle detektiert. Verständlicherweise können durch eine entsprechend geänderte Schaltung auch Schaltimpulse an der positiven und an der negativen Halbwelle detektiert werden.

## Patentansprüche

1. Universaldimmer, insbesondere zum Dimmen aus einem Wechselstrannetz (L, N) von Niedervolt-Halogenlampen, nachstehend als NVH-Lampen bezeichnet, bei dem mittels einer Detektorschaltung (8)
- bei kapazitiver Last, wie sie elektronische Transformatoren darstellen, eine Steuerschaltung (5) auf eine Dimmschaltung (1) im Sinne einer Phasenabschnittsteuerung einwirkt und der
- bei induktiver Last, wie sie herkömmliche Transformatoren darstellen, die Steuerschaltung (5) auf die Dimmschaltung (1) im Sinne einer Phasenanschnittsteuerung einwirkt,
wobei die Dimmschaltung (1) zwei gegensinnig in Serie geschalteten Halbleiterventilen (2 3), nachstehend als antiserielle Schaltung bezeichnet, aufweist, die an ihrer Verbindungsleitung an Bezugsmasse (10) der Steuerschaltung (5) liegen, und wobei die Detektorschaltung Schaltimpulse auswertet,
**dadurch gekennzeichnet,**
**daß** die Detektorschaltung dafür ausgelegt ist, den beim Abschalten einer induktiven Last (9) in Phasenabschnittsteuerung auftretenden Schaltimpuls (12) oberhalb eines vorgegebenen Schwellwerts (13) für zumindest eine Halbwelle zwischen Neutralleiter (7) und Bezugsmasse (10) zu detektieren.

2. Universaldimmer nach Anspruch 1,
**dadurch gekennzeichnet,**
**daß** als Halbleiterventile (2, 3) Leistungstransistoren dienen, deren Gates (15) gesondert und gegensinnig angesteuert sind.

3. Universaldimmer nach Anspruch 1 und 2,
**dadurch gekennzeichnet,**
**daß** die Detektorschaltung (8) mit einem Zeitfenster arbeitet, das mehrere Halbwellen erfaßt und daß sie ein Umschaltsignal erst abgibt, wenn über mehrere Halbwellen der eingestellte Schwellwert (13) überschritten wird.

4. Universaldimmer nach Anspruch 1 oder 2,
**dadurch gekennzeichnet,**
**daß** als Halbleiterventile (2, 3) MOSFETs dienen.

5. Universaldimmer nach Anspruch oder 2,
**dadurch gekennzeichnet,**
**daß** als Halbleiterventile (2, 3) IGBTs dienen.

6. Verfahren zum Dimmen aus einem Wechselstrannetz (L, N), insbesondere von NVH-Lampen, indem bei kapazitiver Last im Sinne einer Phasenabschnittsteuerung gedimmt wird und bei induktiver Last im Sinne einer Phasenanschnittsteuerung gedimmt wird,
**dadurch gekennzeichnet,**
**daß** beim Abschalten einer induktiven Last auftretende Schaltimpulse (12) oberhalb eines vorgegebenen Schwellwerts (13) für zumindest eine Halbwelle zwischen Neutralleiter (7) und Bezugsmasse (10) detektiert werden.

## Claims

1. Universal dimmer, in particular for dimming low-voltage halogen lamps, referred to below as NVH lamps, out of an alternating current network (L, N), in which - by means of a detector circuit (8) -
- in the case of a capacitive load such as is represented by electronic transformers, a control circuit (5) acts on a dimming circuit (1) in the sense of phase-sector control and which
- in the case of an inductive load such as is represented by conventional transformers, the control circuit (5) acts on the dimming circuit (1) in the sense of generalised phase control,
with the dimming circuit (1) having two semiconductor valves (2, 3) connected in series in opposite direction, referred to below as an antiserial circuit, which at their connecting line are connected to the earth reference (10) of the control circuit (5), and with the detector circuit evaluating switching pulses,
**characterised in that**
the detector circuit is dimensioned for detecting the switching pulse (12), which occurs when disconnecting an inductive load (9) in phase-sector control, above a specified threshold value (13) for at least a half wave between neutral conductor (7) and earth reference (10).

2. Universal dimmer according to Claim 1, **characterised in that** power transistors, the gates (15) of which are controlled separately and in opposite direction, serve as semiconductor valves (2, 3).

3. Universal dimmer according to Claims 1 and 2, **characterised in that** the detector circuit (8) works with a time window which spans several half waves and **in that** it does not give a switchover signal until the set threshold value (13) is exceeded over several half waves.

4. Universal dimmer according to Claim 1 or 2, **characterised in that** MOSFETs serve as semiconductor valves (2, 3).

5. Universal dimmer according to Claim 1 or 2, **characterised in that** IGBTs serve as semiconductor valves (2, 3).

6. Method for dimming out of an alternating current network (L, N), in particular of NVH lamps, in which in the case of a capacitive load, dimming takes place in the sense of phase-sector control and in the case of an inductive load, dimming takes place in the sense of generalised phase control,
**characterised in that** switching pulses (12), which occur when disconnecting an inductive load, above a specified threshold value (13) for at least one half wave between neutral conductor (7) and earth reference (10) are detected.

## Revendications

1. Variateur de luminosité universel, notamment pour faire varier la luminosité à partir d'un réseau (L, N) de courant alternatif de lampes à halogène à basse tension, désignées dans ce qui suit comme lampes NVH, dans lequel, au moyen d'un circuit (8) détecteur,
- en cas de charge capacitive telle qu'en représentent des transformateurs électroniques, un circuit (5) de commande agit sur un circuit (1) de variation de la luminosité au sens d'une commande par découpage de phase et qui
- en cas de charge inductive telle qu'en représentent des transformateurs usuels, le circuit (5) de commande agit sur le circuit (1) de variation de la luminosité au sens d'une commande par déphasage,
le circuit (1) de variation de la luminosité comportant deux soupapes (2, 3) à semi-conducteur montées en série en sens opposé, désignées dans ce qui suit comme circuit anti-série, qui sont à la masse (10) de référence du circuit (5) de commande sur leurs lignes de liaison, et le circuit détecteur exploitant des impulsions de commande,
**caractérisé**
**en ce que** le circuit détecteur est conçu pour détecter l'impulsion (12) de commande apparaissant lors de la déconnexion d'une charge (9) inductive dans une commande par découpage de phase au-dessus d'une valeur (13)-seuil prescrite pour au moins une demi-onde entre le conducteur (7) neutre et la masse (10) de référence.

2. Variateur de luminosité universel selon la revendication 1,
**caractérisé**
**en ce qu'**on utilise comme soupapes (2, 3) à semi-conducteur des transistors de puissance, dont les grilles (15) sont commandées de façon distincte et en sens opposé.

3. Variateur de luminosité universel selon les revendications 1 et 2,
**caractérisé**
**en ce que** le circuit (8) détecteur fonctionne en ayant une fenêtre de temps qui détecte plusieurs demi-ondes et en ce qu'il ne fournit un signal de commutation que si la valeur (13)-seuil réglée est dépassée sur plusieurs demi-ondes.

4. Variateur de luminosité universel selon l'une des revendications 1 ou 2,
**caractérisé**
**en ce qu'**on utilise des MOFSET comme soupapes (2, 3) à semi-conducteur.

5. Variateur de luminosité universel selon la revendication 1 ou 2,
**caractérisé**
**en ce que** l'on utilise des IGBT comme soupapes (2, 3) à semi-conducteur.

6. Procédé pour faire varier la luminosité à partir d'un réseau (L, N) de courant alternatif, notamment de lampes NVH, en faisant varier la luminosité pour une charge capacitive au sens d'une commande par découpage de phase et en faisant varier la luminosité pour une charge inductive au sens d'une commande par déphasage,
**caractérisé**
**en ce qu'**on détecte des impulsions (12) de commande apparaissant lors de la déconnexion d'une charge inductive au-dessus d'une valeur (13)-seuil prescrite pour au moins une demi-onde entre le conducteur (7) neutre et la masse (10) de référence.
